# EUROPÄISCHE PATENTANMELDUNG

(11) **EP 3 357 646 A2**
(43) Veröffentlichungstag der Anmeldung: **08.08.2018**
(21) Anmeldenummer: 18000046.5
(22) Anmeldetag: 19.01.2018
(51) Int. Cl.: B25F 5/02, B24B 23/02

(54) **ELEKTROHANDWERKZEUG MIT STAUBSCHUTZ-ABDECKUNG**

(30) Priorität: 03.02.2017 DE 102017001002
(71) Anmelder: Gerd Eisenblätter GmbH, 82538 Geretsried (DE)
(72) Erfinder: EISENBLÄTTER, Gerd, D-82538 Geretsried (DE)
(74) Vertreter: Tomerius, Isabel

(57) **Zusammenfassung**

Die Erfindung betrifft ein Elektrohandwerkzeug (1) mit einer Werkzeugaufnahme (3), einem Motor zum Antreiben eines in der Werkzeugaufnahme befestigten Werkzeuges (4) sowie einem Gehäuse, das einen Griffbereich (7) und einen Motorbereich (8) zur Aufnahme des Motors aufweist und in dem Lüftungsöffnungen (10) zur Belüftung des Motors ausgebildet sind. Das Gehäuse ist zumindest im. Bereich der Lüftungsöffnungen (10) mit wenigstens einer geschlossenflächigen Abdeckung (11) versehen, die mit einem in Richtung auf die Werkzeugaufnahme (3) weisenden Randbereich (113) an dem Gehäuse anliegt, in einem Bereich oberhalb der Lüftungsöffnungen (10) einen Abstand zum Gehäuse aufweist und in einem Bereich ihres von der Werkzeugaufnahme (3) wegweisenden Randbereiches (114) einen Spalt (12) zwischen Abdeckung (11) und Gehäuse freilässt.

## Beschreibung

Die Erfindung betrifft ein Elektrohandwerkzeug mit einer Werkzeugaufnahme und einem in einem Gehäuse angeordneten Motor zum Antreiben eines in der Werkzeugaufnahme befestigten Werkzeugs. Die Erfindung umfasst dabei sowohl ein Elektrohandwerkzeug, das mittels eines Elektrokabels mit einer Stromquelle verbunden ist, als auch ein Elektrohandwerkszeug, das Strom aus einem integrierten Akku bezieht. Beispiele von Elektrohandwerkzeugen sind Elektroschrauber, Schleif- oder Trenngeräte, wobei Handschleifgeräte im Rahmen dieser Erfindung besonders bevorzugt sind.

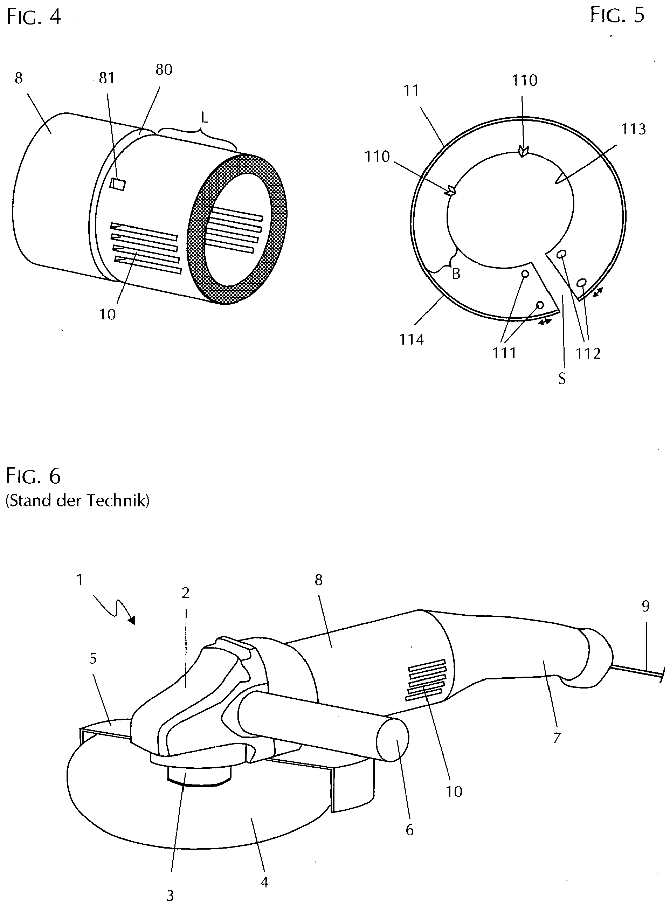

Figur 6 zeigt beispielhaft ein Handschleifgerät des Standes der Technik, konkret einen Winkelschleifer 1. Das Gerät umfasst ein langgestrecktes Gehäuse mit einem Kopfbereich 2, in dessen in der Figur unterem Bereich eine Werkzeugaufnahme 3 nach außen vorsteht, an der eine Schleifscheibe 4 befestigt ist. Zum Schutz des Benutzers wird die Schleifscheibe 4 zu knapp der Hälfte von einer Schutzabdeckung 5 abgedeckt. Der Benutzer hält den Winkelschleifer an einem sich seitwärts vom Kopf 2 weg erstreckenden ersten Handgriff 6 sowie einem zweiten Handgriff 7, der von einem dem Kopf 2 entgegengesetzten, sich verjüngenden Teil des Gehäuses gebildet wird. In einem mittleren, im Wesentlichen zylindrischen Gehäuseteil 8 ist der Motor zum Antrieb der Werkzeugaufnahme 3 und des daran befestigten Werkzeugs - der Schleifscheibe 4 - angeordnet. Zur Versorgung des Motors mit Strom dient hier ein Elektrokabel 9. Lüftungsöffnungen 10 im Motorgehäuse 8 ermöglichen die Versorgung des Motors mit Kühlluft.

Elektrohandwerkzeuge wie das vorstehend beschriebene Schleifgerät 1 werden häufig auf Baustellen oder anderen staubbelasteten Orten eingesetzt oder erzeugen bei ihrem Betrieb selbst Staub. Dieser Staub kann durch die im Gehäuse vorhandenen Lüftungsöffnungen in das Innere des Gehäuses eindringen und sich dort ablagern. Die Staubablagerungen können insbesondere zu einer Beschädigung und Verkürzung der Lebensdauer des Motors führen. In den Geräten des Standes der Technik werden die Lüftungsöffnungen daher gelegentlich mit einem Staubfilter abgedeckt. Dadurch lässt sich zwar der Staubeintrag in das Innere des Gehäuses deutlich reduzieren, jedoch setzen sich die Staubfilter im Laufe des Betriebes zu. Da eine Reinigung oder ein Austausch der Staubfilter oft nur schlecht möglich ist oder ohnehin vergessen wird, erfolgt keine ausreichende Kühlung des Motors mehr, was zu einer Überhitzung und zu einem Motorschaden führen kann.

Aufgabe der Erfindung ist es entsprechend, ein Elektrohandwerkzeug anzugeben, bei welchem die vorstehend beschriebenen Nachteile vermieden werden und welches somit eine längere Lebensdauer aufweist.

Die Lösung dieser Aufgabe gelingt mit einem Elektrohandwerkszeug gemäß Anspruch 1. Bevorzugte Ausführungsformen sind in den abhängigen Ansprüchen beschrieben.

Die Erfindung betrifft also in ihrem breitesten Aspekt ein Elektrohandwerkzeug mit einer Werkzeugaufnahme, einem Motor zum Antreiben eines in der Werkzeugaufnahme befestigten Werkzeuges sowie einem Gehäuse, das einen Griffbereich und einen Motorbereich zur Aufnahme des Motors aufweist und in dem Lüftungsöffnungen zur Belüftung des Motors ausgebildet sind. Das Gehäuse ist zumindest im Bereich der Lüftungsöffnungen mit wenigstens einer geschlossenflächigen Abdeckung versehen, die mit einem in Richtung auf die Werkzeugaufnahme weisenden Randbereich an dem Gehäuse anliegt, in einem Bereich oberhalb der Lüftungsöffnungen einen Abstand zum Gehäuse aufweist und in einem Bereich ihres von der Werkzeugaufnahme wegweisenden Randbereiches einen Spalt zwischen Abdeckung und Gehäuse freilässt.

Die erfindungsgemäße Abdeckung im Bereich der Lüftungsöffnungen des Gehäuses bewirkt, dass der Lufteintritt in die Lüftungsöffnungen im Vergleich zu den Anordnungen des Standes der Technik von der Werkzeugaufnahme aus gesehen weiter nach hinten verlegt und somit der Abstand zu einer wesentlichen Staubquelle, nämlich dem Werkzeug selbst, vergrößert wird, ohne dass deshalb die Lüftungsöffnungen selbst verlegt werden müssten, was ohne praktische Nachteile meist gar nicht realisierbar wäre. Da die Abdeckung auf der Seite, die näher zur Werkzeugaufnahme hin angeordnet ist, an dem Gehäuse anliegt und die Abdeckung insgesamt geschlossenflächig ausgebildet ist und die Lüftungsöffnungen überdeckt, kann bei Betrieb des Elektrohandwerkzeugs erzeugter Staub nicht unmittelbar in die Lüftungsöffnungen eindringen, sondern wird von der Abdeckung über die Lüftungsöffnungen hinweg geleitet. "Geschlossenflächig" bezieht sich dabei auf die fertig montierte Abdeckung und schließt nicht aus, dass die Deckfläche der Abdeckung beispielsweise Montageöffnungen oder Ähnliches aufweist, die jedoch nach der Anbringung der Abdeckung nicht mehr unverschlossen freiliegen. Die Breite der Abdeckung wird dabei zweckmäßig so gewählt, dass sie die Länge der Lüftungsöffnungen übertrifft und sich die Abdeckung somit über das von der Werkzeugaufnahme abgelegene Ende der Lüftungsöffnungen hinweg erstreckt. Die Lufteintrittsöffnung in die Lüftungsöffnungen liegt somit jenseits des von der Werkzeugaufnahme abgelegenen Endes der Lüftungsöffnungen und entgegen der Bewegungsrichtung des Staubes, der sich entlang der Abdeckung bewegt. Da der Staub zudem an der Abdeckung abgebremst wird und/oder sich auf dieser ablagert, gelangt in der Praxis kaum mehr Staub durch die Lüftungsöffnungen hindurch in das Innere des Gehäuses. Eine noch weitere Verbesserung der Ablenkung des Staubs von den Lüftungsöffnungen kann dadurch erreicht werden, dass ein von der Werkzeugaufnahme abgelegener Bereich der Abdeckung vom Gehäuse weg nach außen ausgestellt ist oder auf dem Äußeren der Abdeckung ein Vorsprung ausgebildet ist, der den Staubfluss vom Gehäuse weg nach außen umlenkt.

Die Lüftungsöffnungen in den Gehäusen von Elektrohandwerkzeugen sind häufig in mehreren Gruppen, beispielsweise an gegenüberliegenden Gehäuseseiten, angeordnet. Ein Vorteil der vorliegenden Erfindung besteht darin, dass Lage und Ausbildung der Lüftungsöffnungen prinzipiell wie im Stand der Technik beibehalten werden können und insgesamt die Geräte, abgesehen von der Abdeckung und Befestigungsmitteln für diese, grundsätzlich unverändert bleiben können. In einer Variante ist es dabei möglich, für jede Gruppe von Lüftungsöffnungen eine eigene Abdeckung vorzusehen. Diese Abdeckung ist dann zweckmäßig jeweils so ausgebildet, dass nicht nur ihr zur Werkzeugaufnahme weisender Randbereich, sondern auch die Seitenrandbereiche, welche sich von der Werkzeugaufnahme nach hinten weg erstrecken, am Gehäuse anliegen und so den Eintritt von Staub zwischen Abdeckung und Gehäuse verhindern. Die Abdeckung wölbt sich also über den mit den Lüftungsöffnungen versehenen Bereich des Gehäuses und lässt lediglich im Bereich des Spaltes, der auf der von der Werkzeugaufnahme abgelegenen Seite der Abdeckung liegt, einen Lufteinlass zu den Lüftungsöffnungen frei.

In einer zweiten und bevorzugten Variante werden alle Lüftungsöffnungen, die zur Luftkühlung des Motors dienen, mit einer einzigen Abdeckung in Form einer Manschette vor dem Zutritt von Staub geschützt. Die Manschette umläuft das Gehäuse dabei vollständig und liegt, wie bereits für die einzelnen Abdeckungen beschrieben, mit ihrem vorderen, der Werkzeugaufnahme zugewandten Randbereich am Gehäuse an. Der restliche Bereich der Manschette erstreckt sich vorzugsweise mit einem Abstand zu dem Gehäuse, sodass ein durchgängiger Spalt zwischen Manschette und Gehäuse über fast die gesamte Breite der Manschette gebildet wird.

Die Manschette kann grundsätzlich als geschlossener Ring auf das Gehäuse und über die Lüftungsöffnungen geschoben werden. Leichter handhabbar und damit bevorzugt ist jedoch eine Manschette, die in Querrichtung (=Breitenrichtung) durchgängig geschlitzt ist und dadurch zum Aufsetzen auf das Gehäuse und Durchziehen des Stromkabels aufgespreizt werden kann. Zum Befestigen wird die Manschette dann wieder zusammengeschoben, wobei die von dem Schlitz getrennten Randbereiche der Manschette entweder aneinander zu liegen kommen oder überlappend angeordnet werden. Die Manschette kann als Band gleichmäßiger Breite ausgebildet sein, alternativ jedoch auch ihre Breite in Umfangsrichtung ändern. Beispielsweise ist es möglich, die Breite der Manschette in den Bereichen, in denen keine Lüftungsöffnungen abgedeckt werden müssen, zu verringern.

Das Anbringen der Abdeckung wird dadurch erleichtert, dass an dem Gehäuse wenigstens ein Anschlag für diese vorgesehen wird. Bevorzugt handelt es sich dabei um einen Anschlag für den in Richtung auf die Werkzeugaufnahme weisenden Randbereich der Abdeckung, der, wie erwähnt, an dem Gehäuse anliegt. Ist die Abdeckung als Manschette ausgebildet, besitzt der Anschlag vorzugsweise die Form einer in Umfangsrichtung um das Gehäuse umlaufenden Stufe.

In einer Weiterbildung der Erfindung ist für die zumindest temporäre Befestigung der Abdeckung am Gehäuse wenigstens ein Paar Rastvorrichtungen vorgesehen. Diese Rastvorrichtungen sind in üblicher Weise als Rastvorsprung und Rastvertiefung ausgebildet, von denen eine am Gehäuse und die andere an der Abdeckung angeordnet ist. Bevorzugt sind die Rastvorrichtungen so ausgebildet, dass die Abdeckung wieder von dem Gehäuse gelöst werden kann. Es ist jedoch ebenso gut möglich, dass die Rastvorrichtungen unlösbar ineinander einrasten. Bevorzugt werden zur Befestigung der Abdeckung am Gehäuse mehrere Paare von Rastvorrichtungen verwendet. Zusätzlich kann die Abdeckung mit weiteren Befestigungsmitteln am Gehäuse befestigt werden, beispielsweise mittels Schraubverbindung, Sicherungsbolzen, Sicherungshaken oder -schiebern usw.

Grundsätzlich ist bereits das Anbringen einer Abdeckung über den Lüftungsschlitzen ausreichen, um das Eindringen von Staub in das Innere des Gehäuses deutlich zu reduzieren. Dies gilt insbesondere dann, wenn der Spalt zwischen Abdeckung und Gehäuse nur so groß ausgebildet ist, dass gerade die zur Kühlung des Motors hinreichende Kühlluftmenge durch ihn hindurch gelangen kann. Eine noch weitere Verbesserung gelingt, wenn der Spalt zwischen Abdeckung und Gehäuse mit einem Staubfilter versehen wird. Dieser Staubfilter ist zweckmäßig bereits in die Abdeckung integriert, bevor diese am Gehäuse befestigt wird. Beispielsweise kann der Staubfilter als engmaschiges Sieb ausgebildet sein, das bereits bei der Herstellung der Abdeckung einteilig an diese angeformt wird. Alternativ ist es möglich, an der Abdeckung Halterungen für den Staubfilter vorzusehen und diesen nach der Herstellung der Abdeckung einzusetzen. Geeignet sind prinzipiell alle herkömmlichen Staubfilter, sofern diese einen ausreichenden Luftdurchtritt gestatten. Besonders geeignet sind beispielsweise Filtervliese.

Der Einsatz der beschriebenen Abdeckung ist nicht auf besondere Elektrohandwerkzeuge beschränkt. Vorteilhaft kann die Abdeckung besonders in solchen Elektrohandwerkzeugen verwendet werden, bei deren Einsatz Staub erzeugt wird. Handschleifwerkzeuge sind daher ein bevorzugtes Elektrohandwerkszeug der vorliegenden Erfindung. Die Erfindung kann daher insbesondere bei einem Trenn-, Winkel-, Längs- oder Bandschleifer, einer Polier-, Satinier-, Facettier- oder Entgrattungsmaschine angewendet werden.

Die Erfindung soll nachfolgend am Beispiel eines Winkelschleifers anhand von Zeichnungen näher erläutert werden. Die Zeichnungen sind lediglich schematisch. Gleiche Teile sind mit gleichen Bezugszeichen bezeichnet. In den Figuren zeigen:
- Fig. 1:: einen Winkelschleifer als Beispiel eines erfindungsgemäßen Elektrohandwerkzeugs in perspektivischer Darstellung;
- Fig. 2:: einen Querschnitt entlang der Linie A-A in Figur 1;
- Fig. 3:: eine alternative Ausführungsform in einer Figur 2 entsprechenden Ansicht;
- Fig. 4:: eine geschnittene perspektivische Teilansicht des Gehäuses des Winkelschleifers aus Figur 1 im Bereich der Lüftungsöffnungen;
- Fig. 5:: eine Abdeckung in Form einer geschlitzten Manschette zum Aufsetzen auf das Gehäuse der Figur 4 und
- Fig. 6:: eine perspektivische Ansicht eines Winkelschleifers des Standes der Technik.

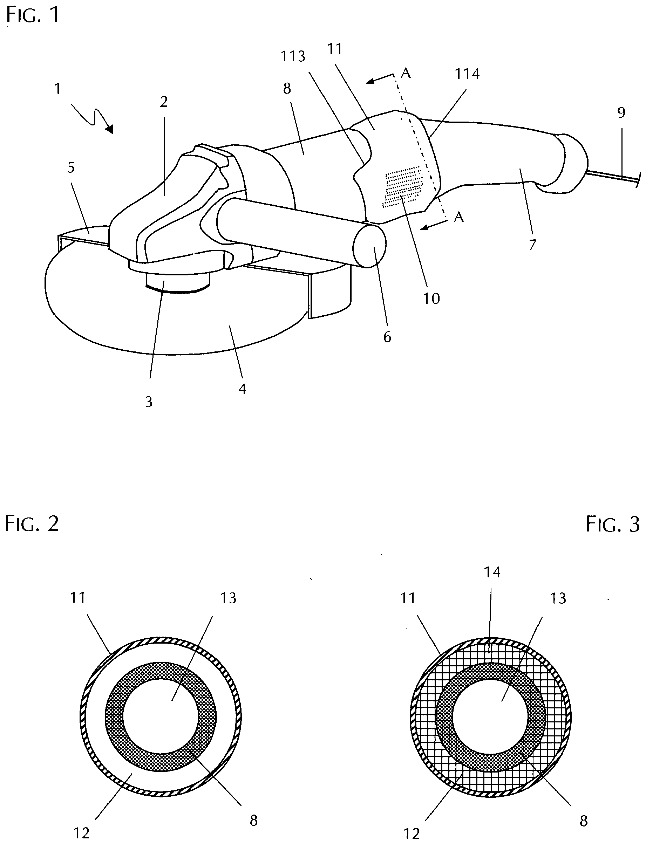

Figur 1 zeigt einen Winkelschleifer als Beispiel eines erfindungsgemäßen Elektrohandwerkzeugs, der in seinem Grundaufbau dem in Figur 6 gezeigten Winkelschleifer des Standes der Technik entspricht. Es werden daher nachfolgend lediglich noch die Abweichungen zwischen beiden Geräten beschrieben.

Der erfindungsgemäße Winkelschleifer 1 unterscheidet sich von demjenigen des Standes der Technik dadurch, dass im Motorbereich 8 des Gehäuses (nachfolgend als Motorgehäuse bezeichnet) oberhalb der Lüftungsöffnungen 10 eine Abdeckung 11 angeordnet ist. Die Lüftungsöffnungen 10 bestehen hier aus zwei Gruppen von parallel verlaufenden Lüftungsschlitzen, die auf gegenüberliegenden Seiten des Motorgehäuses 8 angeordnet sind. Die Lage der dem Betrachter zugewandten Gruppe von Lüftungsschlitzen, die hier von der Abdeckung überdeckt sind, wird durch die punktierten Linien angedeutet. Im gezeigten Beispiel besteht die Abdeckung 11 aus einer ringförmig geschlossenen Manschette, die über den Griffbereich 7 des Gehäuses auf das Motorgehäuse 8 soweit aufgeschoben wurde, bis sie die Lüftungsschlitze 10 vollständig überdeckt. Mit ihrem der Werkzeugaufnahme 3 zugewandten Randbereich 113 liegt die Abdeckung 11 über ihren gesamten Umfang eng an dem Motorgehäuse 8 an. Auf diese Weise wird verhindert, dass Staub von der Werkzeugaufnahmeseite her in die Abdeckung 11 eindringen kann.

Die Breite der Manschette, d.h. der Abstand zwischen dem Randbereich 113 und dem gegenüberliegenden Randbereich 114, ist im Bereich der Lüftungsschlitze 10 größer als in den übrigen Bereichen, um eine sichere Abdeckung der Lüftungsschlitze zu gewährleisten, ohne die Handhabbarkeit des Winkelschleifers unnötig zu beeinträchtigen. Der hintere Randbereich 114 reicht eine gewisse Strecke über das Ende der Lüftungsschlitze hinaus.

Während der vordere Randbereich 113 der Abdeckung 11, wie erwähnt, eng am Gehäuse 8 anliegt, weist der übrige Bereich der Abdeckung 11 einen Abstand zum Gehäuse auf und spreizt sich vom Randbereich 113 in Richtung auf den Randbereich 114 trichterartig etwas nach außen auf. Auf diese Weise wird ein Spalt 12 zwischen Gehäuse 8 und Abdeckung 11 gebildet, durch den hindurch Luft zu den Lüftungsschlitzen 10 gelangen, in das Gehäuse 8 eintreten und dort den (hier nicht sichtbaren) Motor kühlen kann. Die Querschnittsansicht der Figur 2 zeigt diesen Spalt. Der im Gehäuseinneren 13 angeordnete Motor ist der Übersichtlichkeit halber in der Darstellung weggelassen.

Die auf das Gehäuse 8 geschobene, geschlossenflächig ausgebildete Manschette 11 sorgt also dafür, dass beim Einsatz des Winkelschleifers erzeugter Staub an den Lüftungsschlitzen 10 vorbei geleitet und am Eintritt in die Lüftungsöffnungen gehindert wird, ohne dadurch die Belüftung des Motors zu beeinträchtigen. In der Regel ist diese Maßnahme bereits ausreichend, und es werden allenfalls sehr geringe Mengen an Staub mit der Kühlluft durch den Spalt 12 in das Motorgehäuse eingesaugt. Letzteres kann noch sicherer verhindert werden, wenn im Spalt 12 ein Staubfilter 14 angeordnet wird. Diese Weiterbildung ist in Figur 3 gezeigt. Bei dem Staubfilter 14 kann es sich beispielsweise um ein engmaschiges Gitter handeln, welches zweckmäßig bereits bei der Herstellung der Abdeckung an diese angeformt wird. Zusätzlich oder alternativ kann auch ein separat geformter Staubfilter, zum Beispiel in Form eines Filtervlieses, verwendet werden, der an der Abdeckung befestigt wird.

Die Anbringung der Abdeckung 11 in der gewünschten Lage am Gehäuse 8 kann durch das Vorsehen wenigstens eines Anschlages und/oder von Rastvorrichtungen erleichtert werden. Dies soll am Beispiel der Figuren 4 und 5 näher verdeutlicht werden. Figur 4 zeigt eine perspektivische Schnittansicht eines Teils des Motorgehäuses 8. Die in etwa ringförmige Schnittfläche liegt im Bereich der Linie A-A der Figur 1. Die Lüftungsöffnungen 10 bestehen, wie bereits beschrieben, aus zwei Gruppen von jeweils vier Lüftungsschlitzen auf gegenüberliegenden Seiten des Gehäuses. In Richtung auf die Werkzeugaufnahmeseite ist mit einem Abstand zu den Lüftungsschlitzen 10 in dem Gehäuse eine Stufe 80 als Anschlag für die Abdeckung vorgesehen. Die zugehörige Abdeckung 11 ist in Figur 5 gezeigt. Es handelt sich erneut um eine Abdeckung in Form einer Manschette, die diesmal jedoch in Querrichtung einen durchgängigen Schlitz S aufweist, der es erlaubt, die Manschette in Richtung der Doppelpfeile aufzuspreizen und wieder zusammen zu schieben. Dies erleichtert die Montage der Manschette, da diese nun nicht mehr über den Griffbereich 7 und das Kabel 9 aufgeschoben werden muss, sondern unmittelbar auf das Motorgehäuse 8 aufgesetzt werden kann.

Die Manschette 11 wird so auf das Motorgehäuse 8 aufgesetzt, dass der Randbereich 113 am Anschlag 80 zu liegen kommt. Für die richtige Positionierung in Umfangsrichtung sorgen zwei Paare von Rastvorrichtungen, die aus jeweils einer Rastnase 110 dicht benachbart zum Randbereich 113 der Manschette sowie einer zugehörigen Rastvertiefung 81 im Gehäuse 8 bestehen. In Figur 4 ist nur eine dieser Rastvertiefungen erkennbar. Ist die Manschette 11 korrekt auf dem Gehäuse 8 positioniert, schnappen die Rastnasen 110 in den zugehörigen Vertiefungen 81 ein und sichern die Manschette in der richtigen Positionierung am Gehäuse. Anschließend wird die Manschette 11 zusammen geschoben, sodass sich ihre Randbereiche überlappen und die Befestigungsöffnungen 111 und 112 übereinander zu liegen kommen. Die endgültige Befestigung der Manschette am Gehäuse erfolgt dann dadurch, dass zwei Schrauben durch die Befestigungsöffnung 111, 112 hindurch in Schraublöcher des Gehäuses (in Figur 4 nicht sichtbar) eingeschraubt werden. Die so befestigte Manschette 11 bildet einen sich leicht von der Werkzeugaufnahme weg erweiternden Trichter, da der Randbereich 114 eine etwas größere Länge als der Randbereich 113 aufweist. Die Breite B der Manschette 11 ist etwas größer als die Länge L des Gehäuses 8 zwischen Anschlag 80 und dem von diesem abgelegenen Ende der Lüftungsschlitze 10, sodass die Manschette 11 über dieses Ende der Lüftungsschlitze hinausreicht und so einen ausreichenden Schutz gegen das Eintreten von Staub bildet. Durch Entfernen der Schrauben und Lösen der Rastverbindungen kann die Manschette 11 auch wieder vom Gehäuse 8 entfernt werden.

## Patentansprüche

1. Elektrohandwerkzeug (1) mit einer Werkzeugaufnahme (3), einem Motor zum Antreiben eines in der Werkzeugaufnahme befestigten Werkzeuges (4) sowie einem Gehäuse, das einen Griffbereich (7) und einen Motorbereich (8) zur Aufnahme des Motors aufweist und in dem Lüftungsöffnungen (10) zur Belüftung des Motors ausgebildet sind,
**dadurch gekennzeichnet,**
**dass** das Gehäuse zumindest im Bereich der Lüftungsöffnungen (10) mit wenigstens einer geschlossenflächigen Abdeckung (11) versehen ist, die mit einem in Richtung auf die Werkzeugaufnahme (3) weisenden Randbereich (113) an dem Gehäuse anliegt, in einem Bereich oberhalb der Lüftungsöffnungen (10) einen Abstand zum Gehäuse aufweist und in einem Bereich ihres von der Werkzeugaufnahme (3) wegweisenden Randbereiches (114) einen Spalt (12) zwischen Abdeckung (11) und Gehäuse freilässt.

2. Elektrohandwerkzeug nach Anspruch 1,
**dadurch gekennzeichnet,**
**dass** die Abdeckung (11) als Manschette ausgebildet ist, welche das Gehäuse im Bereich der Lüftungsöffnungen (10) vollständig umläuft.

3. Elektrohandwerkzeug nach Anspruch 2,
**dadurch gekennzeichnet,**
**dass** die Manschette in Querrichtung durchgängig geschlitzt ist.

4. Elektrohandwerkzeug nach einem der Ansprüche 1 bis 3,
**dadurch gekennzeichnet,**
**dass** das Gehäuse wenigstens einen Anschlag (80) für den in Richtung auf die Werkzeugaufnahme (3) weisenden Randbereich (113) der Abdeckung (11) aufweist, insbesondere einen Anschlag in Form einer in Umfangsrichtung um das Gehäuse umlaufenden Stufe.

5. Elektrohandwerkzeug nach einem der Ansprüche 1 bis 4,
**dadurch gekennzeichnet,**
**dass** an Gehäuse und Abdeckung (11) wenigstens ein Paar von komplementären Rastverbindungen (81, 110) ausgebildet ist.

6. Elektrohandwerkzeug nach einem der Ansprüche 1 bis 5,
**dadurch gekennzeichnet,**
**dass** die Abdeckung (11) lösbar am Gehäuse befestigt ist.

7. Elektrohandwerkzeug nach einem der Ansprüche 1 bis 6,
**dadurch gekennzeichnet,**
**dass** der Spalt (12) zwischen Abdeckung (11) und Gehäuse mit einem Staubfilter (14) versehen ist.

8. Elektrohandwerkzeug nach Anspruch 7
**dadurch gekennzeichnet,**
**dass** der Staubfilter (14) ein Filtervlies umfasst.

9. Elektrohandwerkzeug nach einem der Ansprüche 1 bis 8,
**dadurch gekennzeichnet,**
**dass** es sich um ein Handschleifwerkzeug, insbesondere einen Trenn-, Winkel-, Längs- oder Bandschleifer, eine Polier-, Satinier-, Facettier- oder Entgratungsmaschine handelt.
